# EUROPEAN PATENT APPLICATION

(11) **EP 4 819 329 A1**
(43) Date of publication of application: **07.10.2026**
(21) Application number: 25877653.3
(22) Date of filing: 03.09.2025
(51) Int. Cl.: H01M 50/242, H01M 50/342, H01M 50/186, H01M 50/367, H01M 50/211, H01M 50/249, B60L 50/64

(54) **BATTERY MODULE, BATTERY PACK AND VEHICLE INCLUDING SAME**

(30) Priority: 08.10.2024 KR 20240136937; 29.05.2025 KR 20250070594
(71) Applicant: LG Energy Solution, Ltd., Seoul 07335 (KR)
(72) Inventor: KIM, Jae-Wook, Daejeon 34122 (KR); SIN, Je-Hwan, Daejeon 34122 (KR); LEE, Su-Hyeong, Daejeon 34122 (KR)
(74) Representative: Plasseraud IP
(86) International application number: PCT/KR2025/013528
(87) International publication number: WO 2026/079674

(57) **Abstract**

A battery module according to an embodiment of the present disclosure may include: a module case having an internal space and including a module bottom plate in which a vent hole for discharging gas is formed; a plurality of battery cells disposed in the internal space of the module case, each of the plurality of battery cells having a venting region in a lower portion thereof so as to discharge internal gas downward, and having a support region in at least a portion of a region other than the venting region in the lower portion; and one or more lower pads disposed between the module bottom plate and the plurality of battery cells to support the support region.

## Description

### TECHNICAL FIELD

The present disclosure relates to a battery module, a battery pack and a vehicle including the same.

This application is based on and claims priority from Korean Patent Application Nos. 10-2024-0136937 and 10-2025-0070594, filed on October 8, 2024 and May 29, 2025, respectively, with the Korean Intellectual Property Office, the disclosures of which are incorporated herein in their entireties by reference.

### BACKGROUND ART

A secondary battery, which has high applicability according to product groups and electrical characteristics such as high energy density, is widely applied not only to portable devices but also to electric vehicles (EVs) or hybrid electric vehicles (HEVs) driven by electric power sources.

Such a secondary battery is attracting attention as a new energy source for improving eco-friendliness and energy efficiency, not only because it has the primary advantage of drastically reducing the use of fossil fuels, but also because it produces no by-products from energy use.

The types of currently and widely used secondary batteries include, for example, lithium ion batteries, lithium polymer batteries, nickel cadmium batteries, nickel hydrogen batteries, and nickel zinc batteries. When a high output voltage is required, a plurality of battery cells may be connected in series to form a battery module or a battery pack. In addition, to increase the charge/discharge capacity, a plurality of battery cells may be connected in parallel to form a battery module or a battery pack. Accordingly, the number of battery cells included in the battery module or pack may be variously set depending on the required output voltage or charge and discharge capacity.

### DISCLOSURE

### Technical Problem

The present disclosure provides a battery module capable of discharging high-temperature gas or flame, generated by a thermal event in a battery cell inside the battery module, downward while also ensuring safety, as well as a battery pack including the same and a vehicle.

However, the technical problems to be solved by the present disclosure are not limited to the above-described problems, and other problems not mentioned above may be clearly understood by a person ordinarily skilled in the art from the description of the present disclosure set forth below.

### Technical Solution

A battery module according to an embodiment of the present disclosure may include: a module case having an internal space and including a module bottom plate in which a vent hole for discharging gas is formed; a plurality of battery cells disposed in the internal space of the module case, each of the plurality of battery cells having a venting region in a lower portion thereof so as to discharge internal gas downward, and having a support region in at least a portion of a region other than the venting region in the lower portion; and one or more lower pads disposed between the module bottom plate and the plurality of battery cells to support the support region.

The module bottom plate may have a plurality of the vent holes formed therein, and at least a portion of the venting regions of the plurality of battery cells may be disposed to face the vent holes.

The module case may further include a module top plate, and an upper pad disposed between the module top plate and the plurality of battery cells to fix the plurality of battery cells.

Each of the battery cells may include a cell exterior material having an accommodating portion configured to accommodate an electrode assembly and a sealing portion configured to seal the accommodating portion, and at least a portion of the sealing portion may be disposed in a region corresponding to the venting region.

The sealing portion may be at least partially folded and disposed in the region corresponding to the venting region.

The sealing portion disposed in the region corresponding to the venting region may be at least partially folded.

Meanwhile, one of the lower pads of the battery module may include a plurality of protrusions formed in an upward direction, and the support region for at least a portion of the plurality of battery cells may be supported by the protrusions.

At least a portion of the plurality of protrusions may have elasticity.

At least a portion of the plurality of protrusions may include an upwardly convex curved surface.

An air layer may be formed between at least a portion of the plurality of protrusions and the module bottom plate.

Each of the lower pads may further include a cutout formed by cutting at least one side thereof.

The cutout may be formed by cutting both sides of each protrusion.

A plurality of pad holes may be formed in the lower pads.

A pad hole formed at a position corresponding to the venting region among the plurality of pad holes may be larger than a pad hole formed at a position corresponding to the support region.

At least one of the plurality of protrusions may support a support region for two adjacent battery cells.

A battery pack according to an embodiment of the present disclosure may include a battery module and a pack case having an internal space configured to accommodate a plurality of battery modules.

The pack case may include a venting passage disposed below the plurality of battery modules and configured to discharge gas, which is discharged from the vent holes, to the outside.

A vehicle according to an embodiment of the present disclosure may include the battery module or battery pack.

### Advantageous Effects

The battery module according to various embodiments of the present disclosure, the battery pack including the same, and the vehicle may stably discharge high-temperature gas or flame, which is generated due to a thermal event in a battery cell inside the battery module, downward.

The battery module according to various embodiments of the present disclosure, the battery pack including the same, and the vehicle may prevent or suppress rupture that may occur at a lower side of a battery cell inside the battery module.

The battery module according to various embodiments of the present disclosure, the battery pack including the same, and the vehicle may efficiently utilize a space occupied by the battery cells inside the battery module.

The battery module according to various embodiments of the present disclosure, the battery pack including the same, and the vehicle may improve cooling performance for the battery cells.

The effects according to the embodiments are not limited to the effects described above, and effects not mentioned may be clearly understood by those skilled in the art from the present specification and the accompanying drawings.

### DESCRIPTION OF DRAWINGS

The following drawings attached hereto illustrate embodiments of the present disclosure and serve to further understand the technical idea of the present disclosure together with the content of the disclosure described above. Therefore, the present disclosure should not be construed as being limited to the matters illustrated in the drawings.
FIG. 1 is a perspective view of a battery module according to an embodiment of the present disclosure.
FIG. 2 is an exploded perspective view of the battery module according to an embodiment of the present disclosure.
FIG. 3 is a cross-sectional view of a battery module according to an embodiment of the present disclosure.
FIG. 4 is a perspective view schematically illustrating a battery cell of a battery module according to an embodiment of the present disclosure.
FIG. 5 is a cross-sectional view illustrating a battery module including battery cells according to an embodiment of the present disclosure.
FIG. 6 is a perspective view illustrating a battery module according to another embodiment of the present disclosure.
FIG. 7 is a perspective view illustrating a lower pad of a battery pack according to another embodiment of the present disclosure.
FIG. 8 is a cross-sectional view illustrating a lower pad according to another embodiment of the present disclosure.
FIG. 9 is a perspective view illustrating a battery module according to another embodiment of the present disclosure.
FIG. 10 is a cross-sectional view illustrating a lower pad and a module bottom plate according to another embodiment of the present disclosure.
FIG. 11 is a perspective view illustrating a battery module according to another embodiment of the present disclosure.
FIG. 12 is a cross-sectional view illustrating a lower pad and a module bottom plate according to another embodiment of the present disclosure.
FIG. 13 is a cross-sectional perspective view illustrating a battery module according to another embodiment of the present disclosure.
FIG. 14 is a cross-sectional view illustrating a battery module according to another embodiment of the present disclosure.
FIG. 15 is an exploded perspective view illustrating a battery pack including battery modules according to embodiments of the present disclosure.
FIG. 16 is a schematic exploded perspective view illustrating a battery pack according to another embodiment of the present disclosure.
FIG. 17 is a cross-sectional view illustrating a battery pack including battery modules according to embodiments of the present disclosure.
FIG. 18 is a view illustrating a vehicle including a battery pack according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Hereinafter, embodiments of the present disclosure will be described in detail with reference to the accompanying drawings. Prior to this, the terms or words used in the specification and claims should not be construed as limited to their ordinary or dictionary meanings, but should be construed in accordance with meanings and concepts consistent with the technical idea of the present disclosure based on the principle that an inventor may appropriately define the concepts of terms in order to explain their invention in the best way.

The embodiments described in the present specification and the configurations illustrated in the drawings are merely some embodiments of the present disclosure and do not represent all of the technical ideas of the present disclosure. Therefore, it should be understood that, as of the filing date, there may be various equivalents and modifications that can replace the embodiments and configurations.

In addition, the present disclosure includes a variety of embodiments. For each embodiment, redundant descriptions for configurations that are substantially the same or similar are omitted, and the differences are mainly described.

In addition, in order to aid understanding of the present disclosure, the attached drawings are not drawn to scale and the dimensions of some components may be exaggerated. In addition, the same reference numbers may be assigned to the same components in different embodiments.

Throughout the specification, unless specifically stated otherwise, each component may be singular or plural.

In addition, when it is described that one component is "connected" or "coupled" to another component, it should be understood that the components may be directly connected or coupled to each other, or other components may be interposed between the components, or the components may be "connected" or "coupled" through other components.

The singular forms used in the present specification include the plural forms unless the context clearly indicates otherwise. In the present application, the term, "composed of," "including," or the like should not be construed to mean that various constituent elements or steps described in the specification are necessarily included. It should be interpreted that some of the constituent elements or some steps may not be included, or that additional constituent elements or steps may be further included.

Throughout the specification, when "A and/or B" is used, it may mean A, B, or both A and B, unless there is a specific statement to the contrary.

Meanwhile, in the present specification, terms indicating directions such as upper, lower, left, right, front, and rear may be used. However, these terms are for the convenience of description only, and it is apparent to those ordinarily skilled in the art that they may vary depending on the location, arrangement, or rotation of the object in question, or the position of an observer with respect to the object.

Since a battery cell accompanies a chemical reaction during charging and discharging, its performance may deteriorate when used in an environment with a temperature higher than an appropriate temperature, and when a thermal control is not performed to maintain the appropriate temperature, there is a constant possibility of unexpected ignition or explosion. In addition, a battery module has a structure in which such battery cells are intensively accommodated inside a module frame. Accordingly, when a thermal event occurs in any one of the battery cells, the discharged high-temperature gas and flame may be transferred to adjacent battery cells, causing chain explosions of the battery cells, which is highly dangerous.

When a battery module includes multiple battery cells, for example, high-temperature gas, flames, or sparks generated during the thermal runaway of a specific battery cell may be ejected, thereby causing thermal damage, structural collapse, or fire not only to the battery module but also to the components of, for example, an electric vehicle using the battery module.

Therefore, when a thermal event occurs in a battery module, there is a need to develop a structure capable of removing or minimizing the influence of, for example, high-temperature gas or flames discharged from the battery module on other components or occupants of, for example, an electric vehicle using the battery module.

The present disclosure provides a battery module capable of discharging high-temperature gas or flames caused by a thermal event occurring in a battery cell downward while ensuring safety, a battery pack and a vehicle including the same.

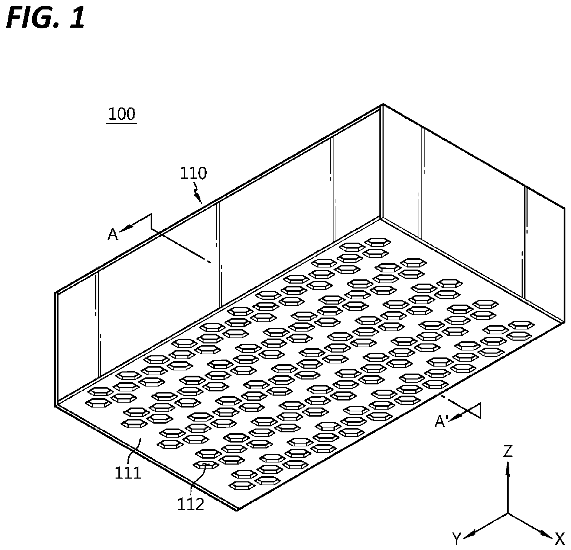

Hereinafter, with reference to FIGS. 1 to 14, a battery module according to the embodiments of the present disclosure, a battery pack and a vehicle including the same will be described.

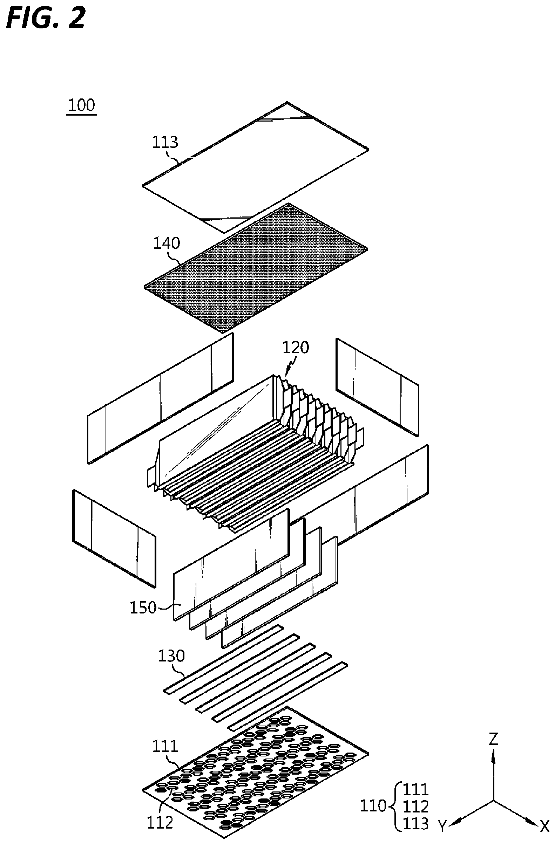

FIG. 1 is a perspective view of a battery module according to an embodiment of the present disclosure. FIG. 2 is an exploded perspective view of the battery module according to an embodiment of the present disclosure.

Referring to FIGS. 1 and 2, the battery module 100 may include a module case 110, a plurality of battery cells 120, and at least one lower pad 130.

In the present specification, unless otherwise specified, the X-axis direction refers to a left-right direction, the Y-axis direction perpendicular to the X-axis direction refers to a front-rear direction, and the Z-axis direction perpendicular to the X-Y plane refers to an up-down direction (*e.g.,* a vertical direction).

The module case 110 may have an internal space formed therein. The module case 110 may include a module bottom plate 111 with a vent hole 112 formed therein to discharge gas.

The internal space of the module case 110 may accommodate the plurality of battery cells 120. In an embodiment, the material of the module case 110 may include metal and/or plastic. The module case 110 of the present disclosure is not limited to a specific material, shape, or coupling method.

The module case 110 may further include members other than the module bottom plate. For example, the module case 110 may further include multiple plates in addition to the module bottom plate. At least a portion of the plurality of plates forming the module case 110 may be configured as an integral structure. The components of the module case 110 may be coupled by a method such as welding or bolting. The configuration, material, shape, and coupling method of the module case 110 are not limited to those described above.

One or more vent holes 112 may be formed in the module bottom plate 111. The vent holes 112 may penetrate the module bottom plate 111 in an up-down direction. The inside and outside of the module case 110 may communicate with each other through the vent holes 112. The vent holes 112 may serve as an outlet for discharging gas generated from the battery cell 120 inside the battery module 100 to the outside of the battery module 100.

The battery cell 120 may be accommodated in the inner space of the module case 110. Here, the battery cell 120 may refer to one secondary battery or to a battery group of multiple secondary batteries. Each battery cell 120 may include an electrode assembly, an electrolyte, and a battery case. The shape of the battery case is not limited. For example, according to the shape of the battery case, the battery cell 120 may be classified into, for example, a pouch-type cell, a cylindrical cell, and a prismatic cell. Since the type, shape, and structure of the battery cell 120 are well known as of the filing date of the present disclosure, a detailed description thereof will be omitted. The present disclosure may be applied to various types of secondary batteries known as of the filing date of the present disclosure. For example, the battery cell 120 may be a lithium secondary battery, but may also be another type of secondary battery.

Each battery cell 120 may include an electrode terminal. The electrode terminal may include a positive electrode lead and a negative electrode lead. The positive electrode lead and the negative electrode lead may protrude from the battery cell 120. A plurality of battery cells 120 may be electrically connected to each other in series or in parallel through the electrode terminals. The battery module 100 may further include, for example, a busbar to facilitate connection between the electrode terminals of the plurality of battery cells 120 or to detect electrical signals from the electrode terminals.

The plurality of battery cells 120 may be arranged in the internal space of the module case 110. In the internal space of the module case 110, the battery cells 120 may be configured in a form stacked in at least one direction. For example, as illustrated in FIG. 2, the battery cells 120 may be stacked in a form arranged side by side in a horizontal direction or in a left-right direction (*e.g.,* the X-axis direction). The battery cells 120 provided in the module case 110 may be electrically connected to each other in series and/or in parallel.

Each battery cell 120 disposed in the internal space of the module case 110 may be provided with a "venting region" in a lower portion thereof. In addition, each battery cell 120 may be provided with a "support region" in the lower portion thereof. Here, the "support region" may be provided in at least a portion, excluding the venting region, in the lower portion of the battery cell.

The lower pad 130 may be disposed between the module bottom plate 111 and the plurality of battery cells 120. The lower pad 130 may be disposed above the module bottom plate 111 and below the battery cells 120 so as to support the battery cells 120. For example, the lower pad 130 may be configured to support the support regions provided in the lower portions of the battery cells 120.

A required number of lower pads 130 may be provided. Alternatively, a plurality of lower pads 130 may be provided. For example, the lower pads 130 may be provided in the same number as the battery cells 120. In this case, each lower pad 130 may support a different battery cell 120. Alternatively, the lower pads 130 may be provided in a number different from that of the battery cells 120. For example, one lower pad 130 may be configured to support two or more battery cells 120.

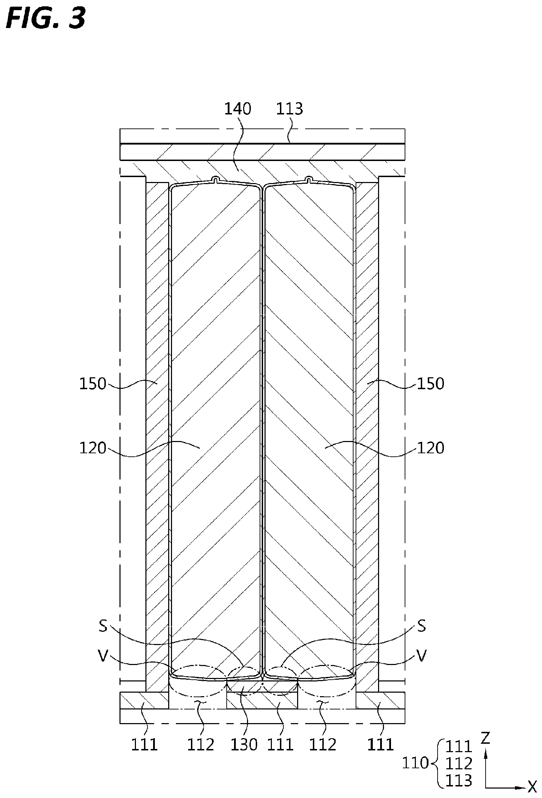

Hereinafter, with reference to FIG. 3, a venting region, a support region, a lower pad 130, and an upper pad 140 of the battery cell 120 will be described.

FIG. 3 is a cross-sectional view of a battery module according to an embodiment of the present disclosure.

FIG. 3 is a partial cross-sectional view of the battery module 100 taken along line A-A' of FIG. 1. In FIG. 3, for convenience of illustration, two battery cells 120 are mainly illustrated; however, the present embodiment may be applied in its entirety to a plurality of battery cells 120 of the battery module 100 and surrounding components thereof.

A lower portion of each battery cell 120 may be provided with a venting region, as indicated by a portion marked with V. Such a venting region V may be a portion through which the gas inside the battery cell 120 is discharged to the outside. The venting region V may be provided with an outlet through which, for example, flame, gas, and sparks are discharged when a thermal event occurs in the battery cell 120.

The venting region V may be configured to facilitate the discharge of gas generated inside the battery cell 120. For example, the venting region V may include one of a vent hole and a tear line, but is not limited thereto.

Since the venting region V is a region that is opened to discharge high-temperature gas when the high-temperature gas is generated inside the battery cell 120, the venting region V may be sealed relatively weakly compared to other regions of the battery cell 120. The venting region V may also be a portion in which a venting structure is provided to facilitate venting through the corresponding portion. The venting region V may further refer to a space provided by another component (not illustrated) inside the battery cell 120 so as to allow the gas discharged from the battery cell 120 to move and be discharged only to a specific portion of the battery cell 120 without moving to other portions.

A region of the lower portion of the battery cell 120 supported by the lower pad 130 may be referred to as a "support region S." The support region S may be provided in at least a portion of a region of the lower portion of the battery cell 120 excluding the venting region V. For example, referring to FIG. 3, a region of the lower portion of the battery cell 120 may be the venting region V, and a region of the lower portion of the battery cell 120 excluding the venting region V may be the support region S.

The venting region V may be provided at the lower portion of the battery cell 120 so as to allow internal gas of the battery cell 120 to be discharged downward (in the negative Z-axis direction). Alternatively, the venting region V may be configured such that the venting direction is oriented downward.

When a thermal event occurs in at least a portion of the battery cells 120, high-temperature gas or flame may be discharged to a lower portion of the battery module 100 through the vent holes 112.

The battery module 100 may be disposed in a vehicle (not illustrated) to supply electric power to other components of the vehicle. According to the present embodiment, the battery module 100 may be disposed at a lower portion of the vehicle, and the venting regions V and/or the vent holes 112 may be arranged to face a lower side of the vehicle. The lower side of the vehicle may refer to a direction facing the ground. In this case, other components of the vehicle may be disposed on an upper side (+Z direction) of the battery module 100. For example, when the battery module 100 is disposed in the vehicle, a module bottom plate 111 of the battery module 100 may be oriented toward the lower side of the vehicle (*e.g.,* the ground), and a module top plate 113 of the battery module 100 may be oriented toward an interior of the vehicle.

According to the above-described configuration, when a thermal event occurs in one or more battery cells 120, high-temperature gas or flame may be discharged toward the ground in the lower side of the vehicle (*e.g.,* a downward venting). Therefore, the influence on other components of the vehicle may be suppressed, the possibility of fire spreading to the entire vehicle may be suppressed, and the possibility of causing harm to the occupants of the vehicle may also be suppressed. Furthermore, according to the above-described configuration, since there are no or fewer components disposed on the lower side of the battery module 100 compared to the upper side of the battery module 100 that may interfere with venting, a smooth venting may be achieved.

The lower pad 130 may be disposed between the module bottom plate 111 and the battery cell 120 so as to support the support region S in an upward direction (+Z-axis direction). The lower pad 130 may include a flexible, elastic, or soft material. In addition, the lower pad 130 may include a material having electrical insulation properties. For example, the lower pad 130 may include a material such as rubber, silicone, or a polymer.

The support region S of the lower portion of the battery cell 120 may be supported by the lower pad 130, thereby alleviating pressing due to vertical load. According to the above-described configuration, by alleviating the vertical load applied to the support region S, the pressure applied to the entire lower region of the battery cell 120 may be alleviated, and the possibility of a problem occurring in which materials such as electrolyte are leaked to the outside of the battery cell 120 may be suppressed.

Referring to FIG. 3, one lower pad 130 may support two adjacent battery cells 120. For example, two battery cells 120 may be disposed such that the respective support regions S thereof are adjacent to each other, and one lower pad 130 may support two adjacent support regions S.

In the lower portion of each battery cell 120, materials such as electrolyte may accumulate due to gravity and may be pressed due to the load of the battery cell 120. For example, when the pressure applied to materials such as electrolyte at a predetermined position becomes excessively high, the lower portion of the battery cell 120 may at least partially rupture, and a problem in which materials such as electrolyte are leaked to the outside of the battery cell 120 may occur.

According to the embodiments of the present disclosure, the lower pad 130 may alleviate pressure applied to the support region S at the lower portion of the battery cell 120 due to the load of the battery cell 120, and may suppress the possibility of a problem in which the lower portion of the battery cell 120 ruptures and materials such as electrolyte are leaked to the outside of the battery cell 120.

According to the embodiments of the present disclosure, since the lower pad 130 does not block between the venting region V and the corresponding vent hole 112, the lower pad 130 may stably support the support region S while not interfering with the discharge of venting gas from the venting region V.

An isolation pad 150 may partition an inner space of a module case 110. The isolation pad 150 may isolate a plurality of battery cells 120. In addition, the isolation pad 150 may laterally support the plurality of battery cells 120 so that they do not fall over. The isolation pad 150 may include a flexible, elastic, and soft material. The isolation pad 150 may include a fireproof material and/or a heat-resistant material. A plurality of isolation pads 150 may be provided, and the number thereof is not limited. A ratio between the number of isolation pads 150 and the number of battery cells 120 may be appropriately designed according to, for example, a required energy density. For example, one isolation pad 150 may be provided for every two battery cells 120. In another example, one isolation pad 150 may be provided for every three or four battery cells 120

The isolation pad 150 may suppress the influence of a thermal event that occurs in one battery cell 120 on another battery cell 120. The isolation pad 150 may not only serve to support the battery cell 120 but may also serve to guide gas when a thermal event occurs in the battery cell 120 and venting gas is discharged, so that the gas moves toward the vent holes 112 rather than toward another battery cell 120.

Referring to FIGS. 1 and 2, a plurality of vent holes 112 may be formed in the module bottom plate 111 of the battery module 100. For example, the vent holes may be formed in the module bottom plate in the front-rear direction and/or the left-right direction.

In addition, a plurality of battery cells 120 may be provided. For example, as illustrated in FIG. 2, a plurality of battery cells included in one battery module may be stacked in the left-right direction.

In this case, at least a portion of the venting regions V of the plurality of battery cells 120 may be disposed to face the vent holes 112.

For example, as illustrated in FIG. 3, the venting region V provided in each battery cell 120 may have a vent hole 112 disposed to face a lower portion thereof. Alternatively, the venting regions V of all the battery cells 120 included in a cell stack may be disposed to directly face, at the lower portions thereof, at least one vent hole 112. The venting regions V may not receive vertical load due to the vent holes 112. According to the above-described configuration, vertical load applied to the venting regions V of the battery cells 120 may be removed, thereby reducing the pressure applied to entire lower regions of the battery cells 120 and suppressing the possibility of a problem in which materials such as electrolyte are leaked to the outside of the battery cells 120.

According to the configuration in which a region of a lower portion of each battery cell 120 is provided as a support region S and the remaining region is provided as a venting region V, vertical load applied to the venting region V of the lower portion of the battery cell 120 may be removed, and vertical load applied to the support region S may be alleviated, thereby minimizing the pressure applied to the entire lower region of the battery cell 120 and suppressing the possibility of a problem in which materials such as electrolyte are leaked to the outside of the battery cell 120.

Referring to FIGS. 2 and 3, the battery module 100 according to the present disclosure may further include a module top plate 113. The module top plate 113 is a component included in the module case 110 and may be disposed above the plurality of battery cells 120. Another component may be disposed between the module top plate 113 and the battery cells 120.

The battery module 100 according to the present disclosure may further include an upper pad 140. The upper pad 140 may be disposed between the module top plate 113 and the plurality of battery cells 120. The upper pad 140 may be disposed below the module top plate 113 and above the battery cells 120. For example, the upper pad 140 may be formed in a rectangular sheet shape and may be interposed between the module top plate 113 and the battery cells 120 in a horizontally laid state.

The upper pad 140 may fix one or more battery cells 120. In addition, one upper pad 140 may fix a plurality of battery cells 120. The upper pad 140 may be disposed to fill a space between the module top plate 113 and the battery cells 120, and may be configured to suppress movement of the battery cells 120 in a lower space of the upper pad 140. For example, the upper pad 140 may be configured in the form of a resin having adhesiveness. In this case, the upper pad 140 may adhesively fix the top ends of the battery cells 120 and the module top plate 113 to each other. The upper pad 140 may press the upper portions of the battery cells 120 in a downward direction (negative Z-axis direction). In this case, the upper pad 140 may support the battery cells 120 together with the lower pad 130 so that the battery cells 120 are stably fixed inside the module case 110. In addition, the upper pad 140 may include an elastic material. In this case, the upper pad 140 may be interposed between the module top plate 113 and the battery cells 120 in a compressed state. In this case, the pressing and fixing effect on the battery cells 120 by the upper pad 140 may be improved.

Referring to FIG. 3, the lower side of the upper pad 140 may be pressed by the battery cells 120, so that grooves may be recessed corresponding to upper shapes of the battery cells 120. The grooves formed according to the upper shapes may stably support the battery cells 120 so that the battery cells 120 do not move in a lateral direction (*e.g.,* X-axis direction).

The upper pad 140 may include a heat-resistant material. For example, the upper pad 140 may include, as the heat-resistant material, for example, glass fiber, polystyrene, polyurethane, cellulose, a vacuum panel, aerogel, perlite, cork, or polyisocyanurate, but is not limited thereto.

According to the above-described configuration, the upper pad 140 including the heat-resistant material may support one or more battery cells 120 while suppressing heat generated from the battery cell 120 from being transferred upward (+Z direction) through the module top plate 113 of the battery module 100. For example, when the battery module 100 is disposed at a lower portion of a vehicle, and other components of the vehicle are disposed above the battery module 100, the upper pad 140 including the heat-resistant material may suppress heat generated from the battery cell 120 from being transferred to the other components located near the battery module 100 of the vehicle.

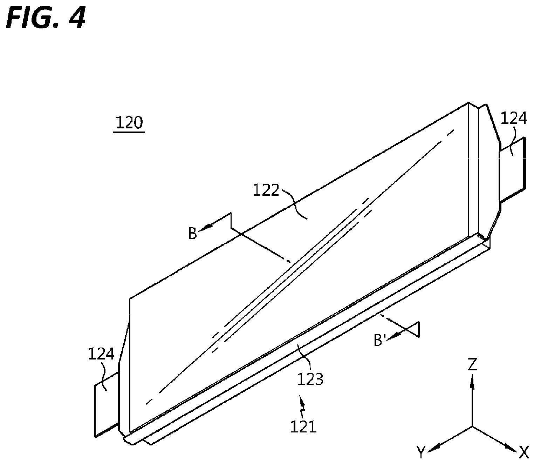

FIG. 4 is a perspective view schematically illustrating a battery cell of a battery module according to an embodiment of the present disclosure.

The battery cell 120 of the embodiment described with reference to FIG. 4 may also be applied to the embodiment described above with reference to FIGS. 1 to 3. Referring to FIG. 4, the battery cell 120 may be a pouch-type battery. The battery cell 120 may include, as a cell exterior material 121, an accommodation portion 122 and a sealing portion 123. The cell exterior material 121 may also be referred to as a battery case.

The accommodation portion 122 may be a portion of the cell exterior material 121 that accommodates an electrode assembly therein. An electrolyte may also be accommodated in an inner space of the accommodation portion 122. The sealing portion 123 may be a portion of the cell exterior material 121 located at an edge of the accommodation portion 122 and configured to seal the accommodation portion 122.

The accommodation portion 122 may have a generally rectangular shape. The sealing portion 123 may be a region of the cell exterior material 121 that surrounds the accommodation portion 122, and may seal the accommodation portion 122 by mutually fusing polymer materials of the cell exterior material 121.

For example, a battery cell in which the sealing portion 123 is formed at four sides (edges) of the accommodation portion 122 may be referred to as a four-side sealing cell, and a battery cell in which the sealing portion 123 is formed at three sides (edges) of the accommodation portion 122 may be referred to as a three-side sealing cell. The battery cell 120 of FIG. 4 is illustrated in the form of a three-side sealing cell in which the sealing portion 123 is formed at three sides of the accommodation portion 122. In addition, in the present disclosure, as a three-side sealing cell, the sealing portion 123 may be provided at the front, rear, and lower sides. Such a configuration may guide gas to be discharged through the region where the sealing portion 123 is disposed, and may be advantageous for gas discharge through the sealing portion 123 disposed at the lower side.

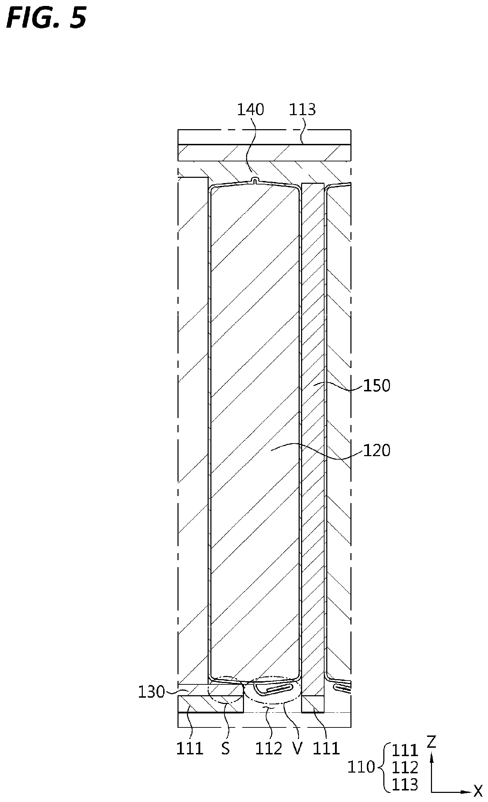

The shape of the lower-side sealing portion 123 of the battery cell 120 according to the present embodiment and the arrangement of the battery cell 120 will be described below with reference to FIG. 5.

FIG. 5 is an enlarged cross-sectional view illustrating a portion of a battery module according to an embodiment of the present disclosure. The descriptions of components of the battery module 100 other than the battery cell 120 in FIG. 5 may be replaced by the descriptions of the components described above with reference to FIGS. 1 to 3.

In the configuration illustrated in FIG. 5, the cross section of the battery cell 120 is a cross section of the battery cell 120 taken along line B-B' of FIG. 4. In the present specification, the illustration of components such as an electrode assembly and electrolyte of the battery cell 120 may be omitted or schematically illustrated for convenience.

In FIG. 5, for the convenience of illustration, one battery cell 120 is mainly illustrated, however, the present embodiment may be respectively applied to the plurality of battery cells 120 of the battery module 100 and surrounding components thereof as well.

As illustrated in FIG. 5, at least a portion of the sealing portion 123 may be disposed in a region corresponding to the venting region V of the battery cell 120. Since the venting region V is a region that is opened to discharge high-temperature gas when high-temperature gas is generated inside the battery cell 120, the sealing portion 123 may be sealed relatively weakly in the region corresponding to the venting region V compared to other regions.

When a thermal event occurs in the battery cell 120 and venting gas is generated inside the battery cell 120, the internal gas of the battery cell 120 may be discharged toward the sealing portion disposed at the lower side. In addition, in the case of a three-side sealing cell, the sealing strength of a side where the sealing portion 123 is formed may be weaker than that of a side where the sealing portion 123 is not formed. In this case, since the sealing portion 123 is not present at the upper side and is provided at the lower side where gravity is applied, the internal gas of the battery cell 120 may be discharged through the lower-side sealing portion 123. Furthermore, since the upper side of the battery cell is blocked by the upper pad 140 and the module top plate 113, and the lateral sides are blocked by other battery cells 120 or side plates, the venting gas may be discharged toward the venting region V in the lower direction.

As illustrated in FIG. 5, when a vent hole 112 is disposed below the venting region V, the venting region V may not receive vertical load, and thus, the possibility that venting gas is discharged through a region of the sealing portion 123 disposed in the venting region V may increase. In addition, when the battery cell 120 is a three-side sealing cell, at least a portion of the sealing portion 123 may be disposed in a region corresponding to the venting region V, and may increase the possibility that venting gas is discharged to the venting region V.

According to such a configuration of the present disclosure, when venting gas is generated inside the battery cell 120 in which a thermal event has occurred, the venting gas may move downward and be discharged to the vent hole 112 through the sealing portion 123 of the venting region V.

At least a portion of the sealing portion 123 of the battery cell 120 may be folded to secure space. For example, in the configuration of FIG. 4, the sealing portion 123 of the lower side of the battery cell 120, where the electrode terminal 124 is not located, may be folded toward the accommodation portion 122.

The folding of the sealing portion 123 means that a portion of the sealing portion 123 is bent or rolled. For example, as illustrated in FIGS. 4 and 5, the sealing portion 123 may have at least a portion folded and disposed in a region corresponding to the venting region V. The sealing portion 123 may be folded in a region sealing a lower-side (edge) portion of the accommodation portion 122.

According to the above-described configuration, since the sealing portion 123 is folded, it may occupy less space than in the case where it is not folded, thereby allowing the internal space of the battery module 100 may be more efficiently utilized. In addition, when the sealing portion 123 sealing the lower-side portion of the accommodation portion 122 is folded, the center of gravity of each battery cell 120 may be moved further downward, the center of gravity of the entire battery module 100 may also be moved downward, the battery module 100 may be more stably disposed in, for example, a vehicle, in which the battery module 100 is used, and the center of gravity of the vehicle may also be lowered to help stable behavior of the vehicle.

According to the above-described configuration, since the folded portion of the sealing portion 123 is disposed in the venting region V, it may not be pressed by the lower pad 130, and thus the sealing durability of the sealing portion 123 may be improved. In addition, since the lower side of the venting region V is a space empty for venting, the folded portion of the sealing portion 123 may be disposed in the space, thereby enabling efficient use of the space.

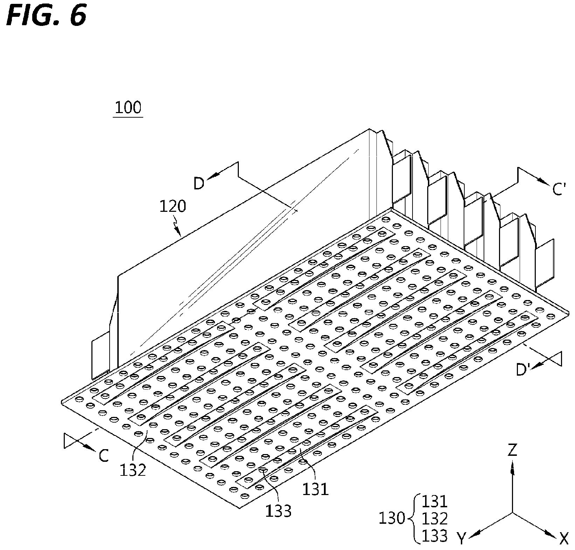

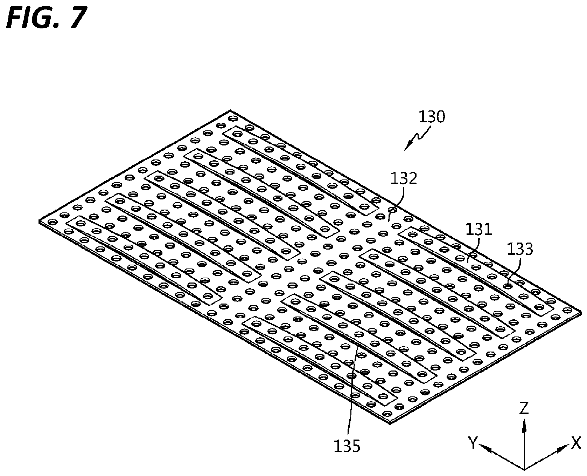

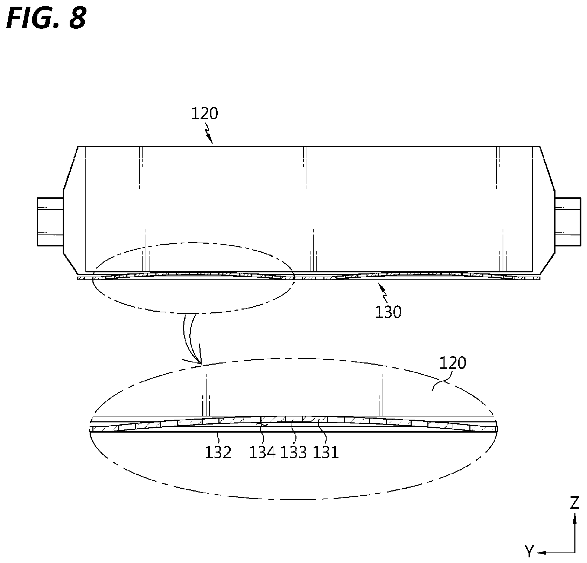

FIG. 6 is a perspective view illustrating battery cells and a lower pad for explaining another embodiment of the present disclosure. FIG. 7 is an upper-side perspective view of the lower pad of a battery module according to another embodiment of the present disclosure. FIG. 8 is a cross-sectional view illustrating a battery cell and a cross section of a lower pad according to another embodiment of the present disclosure.

In FIG. 6, the battery cells 120 and the lower pad 130 of the battery module 100 are illustrated with other components of the battery module 100 omitted. FIG. 6 illustrates the battery cells 120 and the lower pad 130 viewed from the lower side. The battery module 100 may include the same or similar components as those of the battery module 100 described above with reference to other drawings.

As described above, the number of lower pads 130 and battery cells 120 may vary, and one lower pad 130 may support a plurality of battery cells 120.

The lower pad 130 may include a protrusion 131, a flat portion 132, and a pad hole 133. For example, one lower pad 130 may include a plurality of protrusions 131 formed in an upward direction (*e.g.,* +Z-axis direction). Since FIG. 6 is a view of the lower pad 130 viewed from below, regions of a lower surface of the lower pad 130 where the protrusions 131 are disposed are illustrated as recessed upward. However, this is merely an example, and the lower surface of the lower pad 130 may be flat without being recessed, and the protrusions 131 may be formed to protrude only on the upper surface.

A flat region of the lower pad 130, excluding the protrusions 131, may be referred to as the flat portion 132. The flat portion 132 may be disposed between adjacent protrusions 131. The flat portion 132 may be at least partially disposed positions corresponding to the venting regions V of the battery cells 120.

Each protrusion 131 may support one or more battery cells 120. The support regions S of at least a portion of the plurality of battery cells 120 may be supported by the protrusions 131. The number of protrusions 131 and battery cells 120 may be different from each other. The protrusions 131 may have a size and shape sufficient to support the battery cells 120.

According to the above-described configuration, since a plurality of battery cells 120 may be supported by only one lower pad 130, the manufacturing process and structure of the battery module 100 may be simplified.

In an embodiment, at least a portion of the plurality of protrusions 131 may have elasticity. The elasticity of the protrusions 131 may alleviate pressure applied to the lower portions of the battery cells 120.

For example, the protrusions 131 may have elasticity by including a flexible or elastic material as a portion of the lower pad 130. The lower pad 130 may include an elastic material in its entirety, or may further include elastic pads in regions corresponding to the protrusions 131.

In another example, the protrusions 131 may have elasticity by separately disposing an elastic material such as springs below the protrusions 131.

The protrusions 131 having elasticity may relieve pressure applied to lower portions of the battery cells 120. Accordingly, the possibility that the lower portions of the battery cells 120 will rupture may be reduced. In this case, the possibility of a problem occurring in which a substance such as an electrolyte flows out of the battery cells 120 to the outside due to damage to the battery cells 120 may be reduced.

FIG. 8 illustrates a cross-sectional view of the lower pad 130 of FIG. 6, taken along the C-C' line. Referring to FIGS. 6 to 8, at least a portion of the plurality of protrusions 131 may include upwardly convex curved surfaces.

The curved surface of each protrusion 131 may at least partially support the support region S of a battery cell 120. The curved surface of the protrusion 131 may have a structure substantially similar to a dome.

According to the above-described configuration, the load of the battery cell 120 may be dispersed in a lateral direction, and the load of the battery cell 120 may be transmitted along the curved surface and evenly distributed to other regions such as a flat portion of the lower pad 130.

In addition, the curved surface of the protrusion 131 may have elasticity due to its structural characteristics. Accordingly, the curved surface may have the same or similar advantage as a protrusion 131 having elasticity in the above-described embodiment.

Meanwhile, the curved surface of the protrusion 131 may be provided in an appropriate size, shape, and curvature in consideration of, for example, the load, shape, and area to be supported of the battery cell 120.

The protrusion 131 including a curved surface may be arranged in multiple in the length direction (*e.g.,* Y-axis direction) of the battery cells 120. For example, referring to FIG. 8, two protrusions 131 including curved surfaces may be arranged in the length direction (*e.g.,* Y-axis direction) of a battery cell 120. In this case, a flat portion 132 may be disposed between the two protrusions 131.

According to such a configuration, the protrusions may uniformly support the battery cell while having sufficient elasticity overall in the length direction of the battery cell.

The sizes, arrangement, and ratios of the lower pad 130, the protrusions 131, the flat portion 132, and the battery cells 120 illustrated in, for example, FIGS. 6 to 8 are examples, and those skilled in the art may appropriately design the sizes, arrangement, and ratios of such components through experiments.

Referring to FIG. 8, air layers 134 may be formed between at least a portion of the plurality of protrusions 131 and the lower plate of the module. The air layers 134 may be formed in empty spaces provided below the protrusions 131. The air layers 134 may also be formed in lower spaces of the domes of the protrusions 131 described above.

Since the air layers 134 below the protrusions 131 may mitigate pressing and impact applied from above the protrusions 131, the pressure applied to the lower portions of the battery cells 120 may be mitigated. Accordingly, it may be possible to reduce the possibility rupture of the lower portions of the battery cells 120, and reduce the possibility of leakage of a substance such as an electrolyte from the lower portions of the battery cells 120 to the outside. In addition, such air layers may partially mitigate an external impact.

Referring to FIG. 7, the lower pad 130 according to an embodiment of the present disclosure may further include cutouts 135. The cutouts 135 may be formed by partially cutting the lower pad 130. Spaces may be formed below the cutouts 135. The cutouts 135 may be formed by at least partially cutting the lower pad 130 along the length direction of the battery cells 120. Here, the length direction of the battery cells 120 may refer to the Y-axis direction when referring to FIGS. 6 to 8. The cutouts 135 may be configured to guide gas discharged from the venting regions V to be discharged downward from the lower pad 130. The gas discharged to the lower side of the lower pad 130 may be discharged to the outside through the vent holes 112 formed in the module bottom plate 111 of the battery module 100 (see, *e.g.,* FIGS. 1 and 2).

Since the battery cells 120 involve a chemical reaction during charging and discharging and inevitably generates heat, the cutouts 135 may help heat generated from nearby battery cells 120 to be effectively released to the outside of the battery module 100. Accordingly, the cutouts 135 may prevent or suppress the battery cells 120 from being overheated to reduce the possibility of a thermal event occurring in the battery cells 120, thereby preventing or suppressing the thermal event. In addition, even when gas is generated due to a thermal event from a battery cell 120, the cutouts 135 may provide spaces for the gas to be discharged downward. Thus, the damage caused by the thermal event may be suppressed by allowing a smoother downward venting.

Meanwhile, the cutouts 135 may be formed by cutting at least one side of each of at least a portion of the plurality of protrusions 131.

For example, the cutouts 135 may be formed by cutting opposite sides of the protrusions 131. In another example, after the cutouts 135 are formed, the protrusions 131 may be formed by being lifted upward.

A space may be formed below the protrusions 131. The cutouts 135 may communicate the lower portions of the venting regions V with the spaces below the protrusions 131.

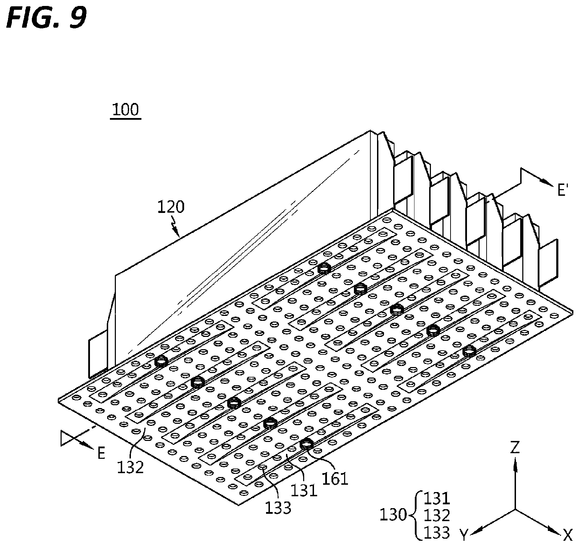

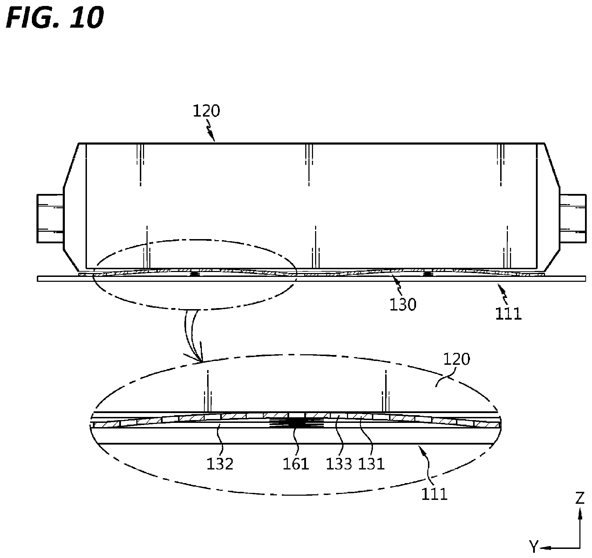

FIG. 9 is a perspective view illustrating a battery module according to another embodiment of the present disclosure. FIG. 10 is a cross-sectional view illustrating a lower pad and a module bottom plate according to another embodiment of the present disclosure.

FIGS. 9 and 10 are views illustrating an embodiment including an elastic element 161 in addition to the embodiment described above with reference to FIGS. 6 to 8. Descriptions of the configurations and structures already explained in the embodiment described above with reference to FIGS. 6 to 8 may be omitted.

Each protrusion 131 may support one or more battery cells 120.

Referring to FIGS. 9 and 10, the battery module may further include one or more elastic elements 161 disposed between at least a portion of the plurality of protrusions 131 and the module bottom plate 111 to support the protrusions 131. The elastic elements 161 may include a material having a predetermined elastic restoring force. The elastic elements 161 may also be configured as springs having an elastic restoring force due to their structural characteristics.

For example, the elastic elements 161 may be configured as a portion of the lower pad 130 and may be disposed between the protrusions 131 and the module bottom plate 111. In another example, the elastic elements 161 may be disposed between the protrusions 131 and the module bottom plate 111 by being attached to at least one of the lower pad 130 and the module bottom plate 111.

The elastic elements 161 may support the protrusions 131. By supporting the protrusions 131, the elastic elements 161 may also support the battery cells 120 disposed above the protrusions 131. The elastic elements 161 may support the protrusions 131 so as to prevent the protrusions 131 from sagging downward due to the load of the battery cells 120.

The elastic elements 161, together with the protrusions 131, may further mitigate pressure applied to lower portions of the battery cells 120 and may further reduce the possibility of rupture of the lower portions of the battery cells 120.

FIG. 10 illustrates a cross-sectional view of the lower pad 130 of FIG. 9, taken along the E-E' line.

The curved surface of each protrusion 131 may have elasticity by its shape itself, and the elasticity may be reinforced by an elastic element 161.

The sizes, arrangements, and ratios of the lower pad 130, the protrusions 131, the flat portion 132, the elastic elements 161, and the battery cells 120 illustrated in FIGS. 9 and 10 are exemplary, and those skilled in the art may appropriately design the sizes, arrangements, and ratios of such components through, for example, experiments.

Referring to FIG. 10, the elastic elements 161 disposed between at least a portion of the plurality of protrusions 131 and the module bottom plate may be formed in empty spaces provided below the protrusions 131 and the module bottom plate 111.

Since the elastic elements 161 below the protrusions 131 may mitigate pressing and impact applied from above the protrusions 131, pressure applied to lower portions of battery cells 120 may be mitigated. Accordingly, it may be possible to reduce the possibility rupture of the lower portions of the battery cells 120, and reduce the possibility of leakage of a substance such as an electrolyte from the lower portions of the battery cells 120 to the outside.

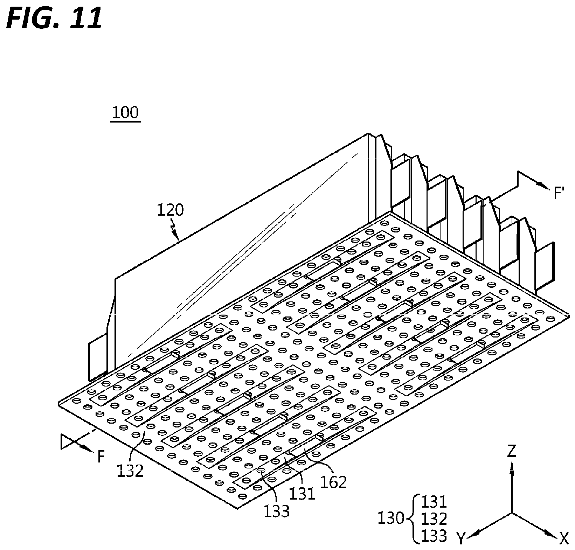

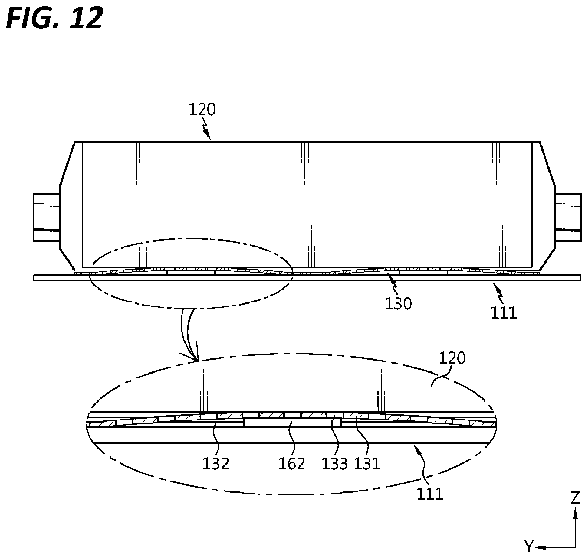

FIG. 11 is a perspective view illustrating a battery module according to another embodiment of the present disclosure. FIG. 12 is a cross-sectional view illustrating a lower pad and a module bottom plate according to another embodiment of the present disclosure.

FIGS. 11 and 12 are views illustrating an embodiment further including a support unit 162 in addition to the embodiment described above with reference to FIGS. 6 to 8. Descriptions of the configurations and structures already explained in the embodiment described above with reference to FIGS. 6 to 8 may be omitted.

Each protrusion 131 may support one or more battery cells 120.

Referring to FIGS. 11 and 12, the battery module may further include one or more support units 162 disposed between at least a portion of the plurality of protrusions 131 and the module bottom plate 111 to support the protrusions 131. The support units 162 may include a material having a predetermined elastic restoring force. For example, the support units 162 may include the same or similar material as the lower pad 130. In another example, the support units 162 may include a material having a higher elastic restoring force than the lower pad 130. In another example, the support units 162 may include a material that is easily deformable in compression.

The support units 162 may be configured as a portion of the lower pad 130 and may be disposed between the protrusions 131 and the module bottom plate 111. In another example, the support units 162 may be disposed between the protrusions 131 and the module bottom plate 111 by being attached to at least one of the lower pad 130 and the module bottom plate 111.

The support units 162 may, by supporting the protrusions 131, also support the battery cells 120 disposed above the protrusions 131. The support units 162 may support the protrusions 131 so as to prevent the protrusions 131 from sagging downward due to the load of the battery cells 120.

The support units 162, together with the protrusions 131, may further mitigate pressure applied to lower portions of the battery cells 120 and may further reduce the possibility of rupture of the lower portions of the battery cells 120.

FIG. 12 illustrates a cross-sectional view of the lower pad 130 of FIG. 11, taken along the F-F' line.

The curved surface of each protrusion 131 may have elasticity by its shape itself, and the elasticity may be reinforced by a support unit 162.

The sizes, arrangements, and ratios of the lower pad 130, the protrusions 131, the flat portion 132, the support units 162, and the battery cells 120 illustrated in FIGS. 11 and 12 are exemplary, and those skilled in the art may appropriately design the sizes, arrangements, and ratios of such components through, for example, experiments.

Referring to FIG. 12, the support units 162 disposed between at least a portion of the plurality of protrusions 131 and the module bottom plate may be formed in empty spaces provided below the protrusions 131 and the module bottom plate 111.

Since the support units 162 below the protrusions 131 may mitigate pressure and impact applied from above the protrusions 131, pressure applied to lower portions of the battery cells 120 may be mitigated. Accordingly, it may be possible to reduce the possibility of rupture of the lower portions of the battery cells 120, and reduce the possibility of leakage of a substance such as an electrolyte from the lower portions of the battery cells 120 to the outside.

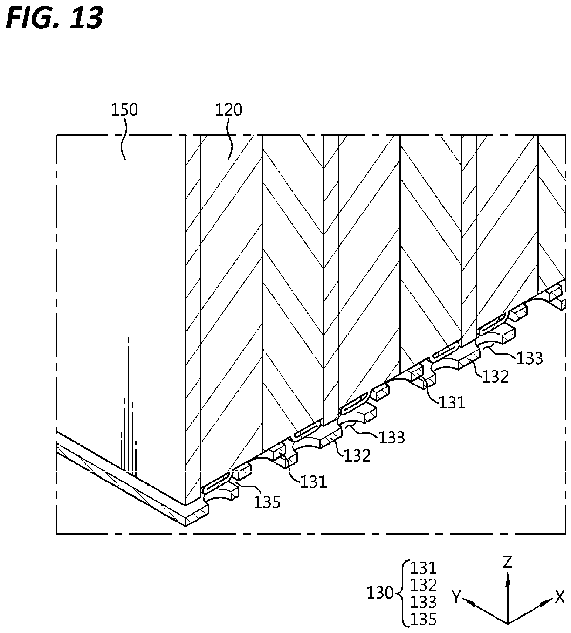

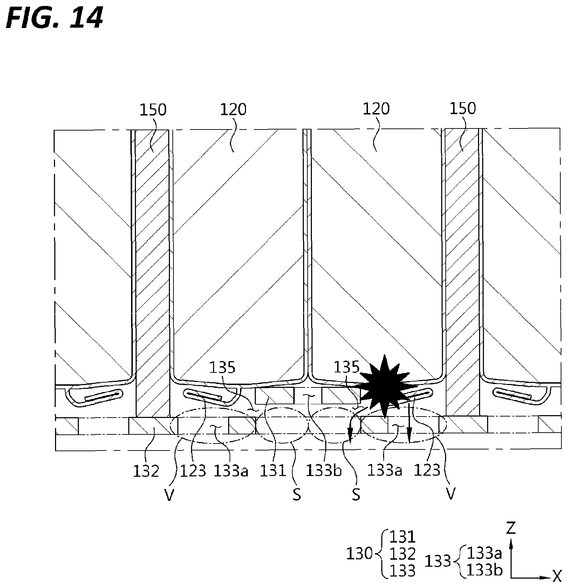

Referring to FIGS. 13 and 14, a plurality of pad holes 133 may be formed in the lower pad 130. The plurality of pad holes 133 are also illustrated in the lower pad 130 of FIGS. 6 and 7. The plurality of pad holes 133 may be formed throughout the lower pad 130.

The pad holes 133 may be formed not only in the venting regions V but also in the support regions S.

The gas generated in the battery cells 120 may be more smoothly discharged toward the lower side of the lower pads 130 through the pad holes 133. Accordingly, the plurality of pad holes 133 may help heat generated from nearby battery cells 120 to be effectively released to the outside of the battery cells 120. The pad holes 133 may prevent the nearby battery cells 120 from overheating, thereby lowering the possibility of a thermal event occurring in the battery cells 120 and preventing the thermal event, and even when the battery cells 120 overheat and a thermal event occurs, the pad holes 133 may suppress damage caused by the thermal event by guiding gas to be discharged downward.

As described above, the pad holes 133 may have a function similar to that of the cutouts 135 described above. While the cutouts 135 discharge gas discharged from the venting regions V to spaces below the protrusions 131, the pad holes 133 may directly discharge gas discharged from the venting regions V to spaces below the venting regions V. Accordingly, the pad holes 133 and the cutouts 135 may perform similar functions while being complementary to each other.

Meanwhile, among the plurality of pad holes 133, a pad hole 133a formed at a position corresponding to a venting region V may be formed larger than a pad hole 133b in another region. For example, a pad hole 133a formed at a position corresponding to a venting region V may be formed larger than the pad hole 133b formed at a position corresponding to a support region S.

As described above with reference to FIG. 3, since each venting region V may serve as an outlet through which, for example, flame, gas, and sparks are discharged when a thermal event occurs in a battery cell 120, a pad hole 133 formed at a position corresponding to the venting region V may be made larger, thereby allowing venting to be performed more smoothly.

Referring to FIGS. 13 and 14, one protrusion 131 may support a plurality of battery cells 120. For example, at least one of the plurality of protrusions 131 may support the support regions S of two adjacent battery cells 120. For example, the two battery cells 120 may be arranged such that their respective support regions S are adjacent to each other, and one protrusion 131 may support the two adjacent support regions S.

According to the above configuration, since the protrusions 131 do not block the spaces between the venting regions V and the pad holes 133a below the venting regions V, the protrusions 131 may stably support the support regions S without hindering venting gas from being discharged from the venting regions V. Furthermore, since one protrusion 131 supports a plurality of battery cells 120, the manufacturing process of the lower pad 130 and/or the protrusions 131 may be simplified, and spaces may be efficiently utilized.

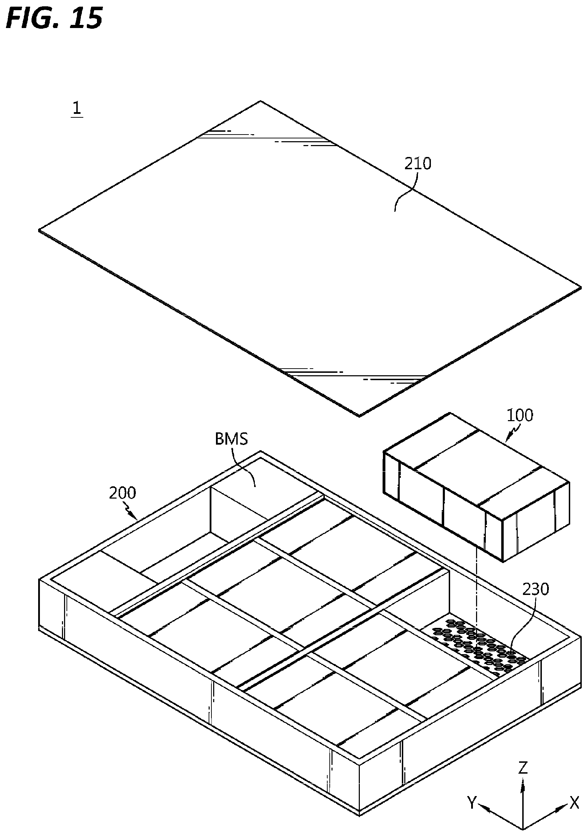

FIG. 15 is a view illustrating a battery pack including battery modules according to an embodiment of the present disclosure.

Referring to FIG. 15, the battery pack 1 according to an embodiment of the present disclosure may include one or more battery modules 100 described above with reference to other drawings.

In addition, the battery pack 1 may further include components other than the battery module 100 according to the present disclosure. For example, the battery pack 1 according to the present disclosure may further include components such as a battery management system (BMS), a bus bar, a relay, and a current sensor.

The battery pack 1 may further include a pack case 200. The pack case 200 may provide a space which may accommodate one or more battery modules 100. When a plurality of battery modules 100 are accommodated in the battery pack 1, the pack case 200 may include partitioned spaces to separately accommodate the plurality of battery modules 100.

A top plate of the pack case 200 may be referred to as a pack top plate 210. FIG. 15 illustrates the battery pack 1 in a state in which the pack top plate 210 of the pack case 200 is separated from other components (*e.g.,* a bottom plate, a left plate, a right plate, a front plate, and a rear plate). For example, the pack case 200 may include a top plate, a bottom plate, a left plate, a right plate, a front plate, and a rear plate based on a rectangular parallelepiped shape. In this case, the left plate, the right plate, the front plate, and/or the rear plate located on the side portions may be formed in a beam shape. At least a portion of the plurality of plates or beams included in the pack case 200 may be configured as an integral structure, but the present disclosure is not limited thereto. The components of the pack case 200 may be coupled by, for example, welding or bolting, but the present disclosure is not limited thereto.

The configuration, material, shape, and coupling method of the pack case 200 of the present disclosure are not limited to those described above.

The pack top plate 210 may be disposed to cover an upper side (*e.g.,* +Z-axis direction) of the space in which the battery modules 100 are disposed. After the battery modules 100 are disposed in the internal space of the pack case 200, the pack top plate 210 may cover an upper side of the pack case 200 to close the internal space.

As described above, since the battery modules 100 are configured to allow downward venting, the battery pack 1 may also be configured to discharge gas, which is discharged, downward, gas discharged from a battery cell in the battery module 100. When the battery pack 1 is mounted at a position lower than occupants of a vehicle such as an electric vehicle and gas is discharged upward from the battery pack 1, it may harm the occupants. The battery pack 1 of the present disclosure may allow downward discharge of gas to avoid harming the occupants, thereby improving occupant safety.

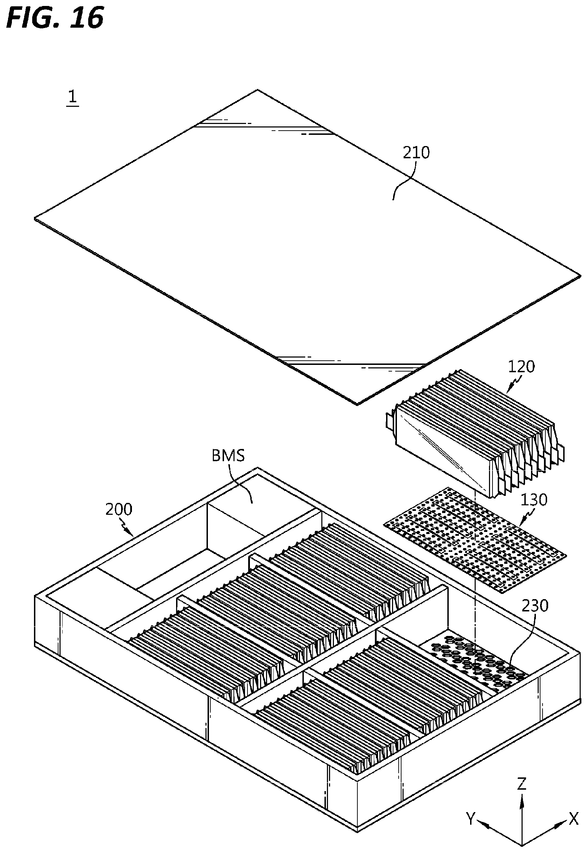

FIG. 16 is a schematic exploded perspective view illustrating a battery pack according to another embodiment of the present disclosure.

The battery pack 1 may include a plurality of battery modules 100, a pack case 200, a lower pad 130, and a BMS. The battery cells 120 may have the same configuration as the battery cells 120 inside the battery module 100 described in other embodiments above with reference to other drawings. For example, each battery cell 120 may be any one of a pouch-type secondary battery, a cylindrical secondary battery, or a prismatic secondary battery.

Referring to FIG. 16, the battery cells 120 may be directly accommodated in a space inside the pack case 200 rather than being disposed in an internal space of a module case. The battery pack 1 may include the battery cells 120 and may be configured in an integrated form in which the module case and the pack case are not separated. For example, the module case 110 of the battery module 100 described above may be configured to serve as the pack case 200 of FIG. 16. In such a form of the battery pack 1, since the battery cells 120 are directly accommodated in the pack case 200 that replaces the module case, the battery pack 1 may be referred to as a cell-to-pack (CTP). According to the present embodiment described with reference to FIG. 16, the technical concept of the present disclosure may also be applied to the CTP-type battery pack 1.

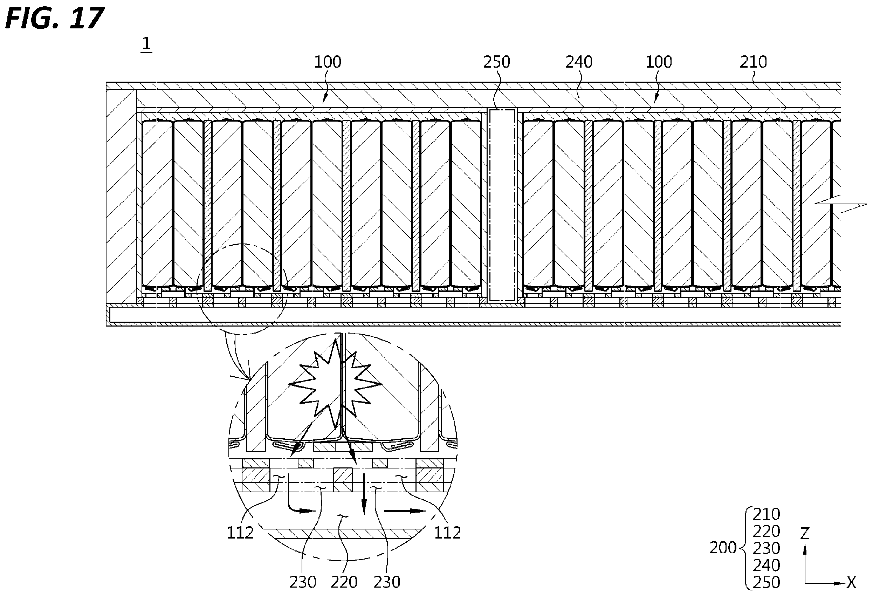

FIG. 17 is a cross-sectional view illustrating a battery pack including battery modules according to embodiments of the present disclosure.

The battery pack 1 may be any one of the battery packs 1 described with reference to FIG. 11 or FIG. 12. The battery module 100 may also be any one of the battery modules 100 described with reference to other drawings.

The battery pack 1 may include the battery module 100 and a pack case 200. The pack case 200 may accommodate multiple battery modules 100 in an internal space.

The pack case 200 may include a pack upper plate 210, a venting passage 220, and a pack hole 230.

The venting passage 220 may be disposed below the multiple battery modules 100. As described above with reference to other drawings, vent holes 112 may be disposed below the battery modules 100. The venting passage 220 may be connected to the outside of the battery pack 1 and the vent holes 112. The venting passage 220 may discharge gas, discharged from the vent holes 112 below the battery modules 100, to the outside of the battery pack 1.

In one region of the venting passage 220, one or more pack holes 230 may be formed. For example, one or more pack holes 230 may be formed above the venting passage 220. The pack holes 230 may be holes or passages formed in a region corresponding to the vent holes 112 below the battery module 100. The venting passage 220 may receive gas, discharged from the vent holes 112 of the battery module 100, through the pack holes 230.

In addition, as illustrated in FIG. 17, the battery pack may further include a heat sink 240.

The heat sink 240 may be for cooling the battery modules 100 and may include a metal material having high thermal conductivity. For example, the heat sink 240 may include, for example, copper, aluminum or an alloy thereof, ceramic, graphite, carbon fiber, or a plastic composite material. The heat sink 240 may be in contact with the battery modules 100 over as large an area as possible, and its position is not particularly limited. For example, as illustrated in FIG. 17, the heat sink 240 may be disposed above the battery modules 100.

A pack space 250 may refer to a remaining space in the pack case 200 other than a space in which the battery modules 100 are disposed. In the pack space 250, various components of the battery pack 1, including the battery modules 100, may be disposed. For example, in the pack space 250, components such as a battery management system (BMS), a bus bar, a relay, or a current sensor, or a beam for space partitioning may be disposed. The pack space 250 may be disposed in a space above the venting passage 220, similar to the battery modules 100.

According to the above-described configuration, a venting gas discharge path of the battery modules 100 and the battery pack 1 including the same may be isolated from other components. For example, gas generated in a battery module 100 may be discharged downward from the battery module 100 through the vent holes 112, and the gas may then be discharged to the outside through the venting passage 220 in a state isolated from other components. Accordingly, the influence of the venting gas generated the battery module 100 on other battery modules 100 may be reduced, and the influence on other components of the battery pack 1, which may be disposed in the pack space 250 (*e.g.,* a BMS, a bus bar, a relay, and a current sensor), may also be suppressed.

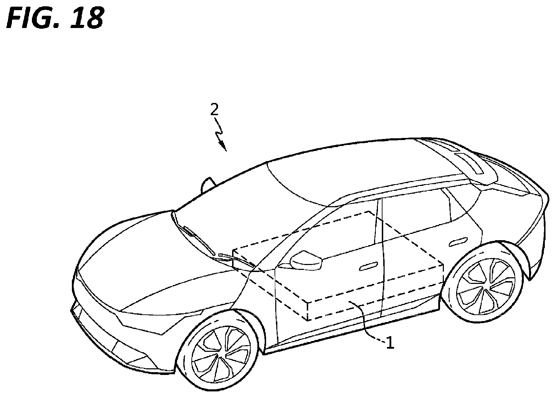

FIG. 18 is a view illustrating a battery module, a battery pack, and a vehicle including the same according to an embodiment of the present disclosure.

Referring to FIG. 18, a vehicle 2 may include one or more battery packs 1 or battery modules. For example, the vehicle 2 may be any one of an electric vehicle, a hybrid vehicle, or a plug-in hybrid vehicle, but is not limited thereto. The vehicle 2 may be any one of a four-wheeled vehicle and a two-wheeled vehicle. The vehicle 2 may operate by receiving power from the battery pack 1 or the battery module according to embodiments of the present disclosure.

Any of the embodiments of the present disclosure described above or other embodiments are not mutually exclusive or distinct. Any of the embodiments of the present disclosure described above or other embodiments may be used in combination or may be combined in terms of their respective configurations or functions.

For example, this means that configuration A described in a specific embodiment and/or drawing and configuration B described in another embodiment and/or drawing may be combined. Even when the combination of configurations is not directly described, unless it is stated that the combination is impossible, it means that the combination is possible.

While the present disclosure has been described above with reference to several embodiments and drawings, the present disclosure is not limited thereto, and various changes and modifications can be made by a person ordinarily skilled in the art to which the present disclosure pertains without departing from the technical spirit of the present disclosure and the equivalent scope of the claims to be described below.

## Claims

1. A battery module comprising:
a module case having an internal space and including a module bottom plate in which a vent hole for discharging gas is formed;
a plurality of battery cells disposed in the internal space of the module case, each of the plurality of battery cells having a venting region in a lower portion thereof so as to discharge internal gas downward, and having a support region in at least a portion of a region other than the venting region in the lower portion; and
one or more lower pads disposed between the module bottom plate and the plurality of battery cells to support the support region.

2. The battery module according to claim 1, wherein the module bottom plate has a plurality of the vent holes formed therein, and
at least a portion of the venting regions of the plurality of battery cells are disposed to face the vent holes.

3. The battery module according to claim 1, wherein the module case further includes:
a module top plate, and
an upper pad disposed between the module top plate and the plurality of battery cells to fix the plurality of battery cells.

4. The battery module according to claim 1, wherein each of the battery cells includes a cell exterior material having an accommodating portion configured to accommodate an electrode assembly and a sealing portion configured to seal the accommodating portion, and
at least a portion of the sealing portion is disposed in a region corresponding to the venting region.

5. The battery module according to claim 4, wherein the sealing portion is at least partially folded and disposed in the region corresponding to the venting region.

6. The battery module according to claim 4, wherein the sealing portion disposed in the region corresponding to the venting region is at least partially folded.

7. The battery module according to claim 1, wherein one of the lower pads includes a plurality of protrusions formed in an upward direction, and
the support region for at least a portion of the plurality of battery cells is supported by the protrusions.

8. The battery module according to claim 7, further comprising:
one or more elastic elements disposed between at least a portion of the plurality of protrusions and the module bottom plate to support the protrusions.

9. The battery module according to claim 7, further comprising:
one or more support units disposed between at least a portion of the plurality of protrusions and the module bottom plate to support the protrusions.

10. The battery module according to claim 7, wherein at least a portion of the plurality of protrusions has elasticity.

11. The battery module according to claim 7, wherein at least a portion of the plurality of protrusions includes an upwardly convex curved surface.

12. The battery module according to claim 7, wherein an air layer is formed between at least a portion of the plurality of protrusions and the module bottom plate.

13. The battery module according to claim 7, wherein each of the lower pads further includes a cutout formed by cutting at least one side thereof.

14. The battery module according to claim 13, wherein the cutout is formed by cutting both sides of each protrusion.

15. The battery module according to claim 7, wherein a plurality of pad holes are formed in the lower pads.

16. The battery module according to claim 15, wherein a pad hole formed at a position corresponding to the venting region among the plurality of pad holes is larger than a pad hole formed at a position corresponding to the support region.

17. The battery module according to claim 7, wherein at least one of the plurality of protrusions supports a support region for two adjacent battery cells.

18. A battery pack comprising the battery module according to claim 1.

19. The battery pack according to claim 18, further comprising:
a pack case having an internal space configured to accommodate a plurality of battery modules,
wherein the pack case includes a venting passage disposed below the plurality of battery modules and configured to discharge gas, which is discharged from the vent holes, to the outside.

20. A vehicle comprising the battery pack according to claim 18.
